(19) Europäisches Patentamt
European Patent Office
Office européen des brevets

(11) Publication number: 0 383 600 A2

# (12) EUROPEAN PATENT APPLICATION

(21) Application number: 90301640.0

(51) Int. Cl.[5]: C08G 65/40

(22) Date of filing: 15.02.90

(30) Priority: 17.02.89 GB 8903648

(43) Date of publication of application: 22.08.90 Bulletin 90/34

(84) Designated Contracting States: DE FR GB IT

(71) Applicant: IMPERIAL CHEMICAL INDUSTRIES PLC
Imperial Chemical House, Millbank
London SW1P 3JF(GB)

(72) Inventor: Staniland, Philip Anthony
1 The Croft
Marton Middlesbrough Cleveland(GB)

(74) Representative: Graham, John George et al
Legal Dept. Patents PO Box 6 Bessemer Road
Welwyn Garden City Hertfordshire AL7 1HD(GB)

## (54) Aromatic polymer.

(57) Aromatic polymers comprise the repeat unit
-Ph-Ph-Ph-
where Ph represents paraphenylene, linked in the polymer chain to itself and/or to adjacent other repeat units by way of oxygen in a group containing up to 3 atoms in line. The polymer does not contain the unit
$-Ph-S-Ph-O-Ph-Ph-Ph-O-Ph-SO_2-Ph-O$
Alternatively the repeat unit, other than the p-terphenylene unit, contains a major proportion of an electron-withdrawing group.

A process for preparing the polymer comprises reacting a dihydroxyaromatic component, comprising 4,4″-dihydroxy-p-terphenyl, with at least one difunctional halogen compound.

EP 0 383 600 A2

## Aromatic Polymer

This invention relates to an aromatic polymer to processes for making it and to shaped articles made from it.

Among aromatic polyethers, those containing sulphone or ketone linkages have come into extensive use when resistance to high temperatures is required. Commercially available polyethersulphones typically have high glass-transition temperatures Tg, eg over 180 °C or 200 °C but are amorphous and thus not resistant to organic liquids. Commercially available polyetherketones crystallise readily and resist organic liquids, but their Tg is lower, eg in the range 140-170 °C. Previous attempts to increase the Tg of polyetherketones have encountered problems such as requiring the use of very expensive intermediates or resulting in polymer melting points Tm too high for convenient processing.

According to the invention an aromatic polymer contains the repeating unit:
-Ph-Ph-Ph- I
where Ph represents paraphenylene, linked in the polymer chain to itself and/or to adjacent other aromatic repeating units by way of oxygen in a group containing up to 3 atoms in line,
with the proviso that the polymer does not comprise the unit
-Ph-S-Ph-O-Ph-Ph-Ph-O-Ph-$SO_2$-Ph-O-

According to another aspect of the invention the aromatic polymer contains the repeating unit
-Ph-Ph-Ph-
wherein Ph represents paraphenylene, linked in the polymer chain to itself and/or to adjacent other repeating units by way of oxygen in a group containing up to 3 atoms in line, the other repeating unit, if present, containing a major proportion of an electron withdrawing group. The linking group can be for example:
-O- as in polyethers
-O-CO- as in polyesters
-O-CO-O- as in polycarbonates
-O-PO(R)-O- as in polyphosphonates.
The other aromatic repeating units can be for example:
phenylene
biphenylene
naphthylene
Ar-(X-Ar)$_n$, where X is -O- or -S- or alkylene up to $C_{10}$ 1,3-phenylene with an electron-withdrawing substituent in its 2-position
Ar-(Y-Ar)$_n$, where Y is an electron-withdrawing group, especially -$SO_2$ or -CO-

(In each case Ar is a divalent aromatic hydrocarbon group optionally substituted by one or more methyl or halogen groups and n is 1 or 2, and the polymer chain linkage is para to Y and preferably para to X).
In preferred polymers the other aromatic repeating units include Ar-(Y-Ar)$_n$. Particular examples of such repeating units are:
Ph-SO-$_2$-Ph
Ph-CO-Ph
Ph-$SO_2$-Ph-Ph-$SO_2$-Ph
Ph-CO-Ph$'$-CO-Ph (where Ph$'$ is paraphenylene or metaphenylene)
Ph-CO-Ph-Ph-CO-Ph
Ph-$SO_2$-Ph-Ph-Ph-$SO_2$-Ph
2-cyano-1,3-phenylene

In the polymer according to the invention, the proportion of the unit -Ph-Ph-Ph- is conveniently in the range 10 to 50, especially 33 to 50, % by moles. Preferably the polymer contains the units Ph-Ph-Ph and Ar -(Y-Ar)$_n$ in equimolar proportions (apart from any excess due to end-groups) to the extent of at least 80% by weight.

The invention provides a process for making the polymer by reacting a dihydroxy aromatic component consisting of or including the compound 4,4$''$-dihydroxy-p-terphenyl, HO-Ph-Ph-Ph-OH, with one or more difunctional halogen compounds. The halogen compound is preferably of formula Z-Ar-Y-Ar-Z, where Z is chlorine or, more preferably fluorine. If the other aromatic repeating unit(s) are to be one or more of the first 4 listed above, which do not contain an activating electron - withdrawing group, the halogen is preferably chlorine or bromine and a copper- containing catalyst should be present, since the halogen is not then reactive enough. The same applies if the unit Ph-Ph-Ph is to constitute more than 50 mole % of the polyether other than end-groups. If the unit Ph-Ph-Ph is to be present at less than 50 mole % of the

polyether, then one or more dihydroxy compounds corresponding to the said other aromatic repeating units is present in the reaction mixture.

In a modified process for making such a polyether the dihalogen compound(s) and dihydroxy compounds, other than HO-Ph-Ph-Ph-OH, are replaced partly by a polymer or oligomer containing a succession of units Ar-Y-Ar and/or 2-cyano-1,3-phenylene. The polyether is then formed by opening the ether links between such units and insertion of the unit Ph-Ph-Ph whose phenoxide anion is a stronger nucleophile than the phenoxides of those units.

The process conditions include at least one and preferably all of the following:

presence of solvent, especially a sulphoxide or sulphone, most suitably an aromatic sulphone;

presence of base in quantity at least stoichiometrically equivalent, preferably in an excess of 1-5 mol %, to the compound HO-Ph-Ph-Ph-OH and other dihydroxy compounds if present; the base is optionally introduced as the di-salt of the dihydroxy compounds, but is preferably not stronger than carbonate;

temperature in the range 150-400 deg C. More specifically the solvent has the formula

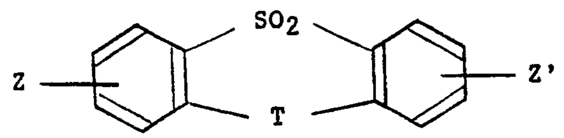

where T is a direct link, oxygen or two hydrogens (one attached to each benzene ring); and

Z and Z′, which may be the same or different, are hydrogen or alkyl, aryl, aralkyl or alkaryl.

Preferably the base includes one or more alkali metal carbonates, especially potassium carbonate. If a mixture of carbonates is used, it preferably includes, to the extent of 1 to 5% by moles of the stoichiometric requirement, a carbonate of an alkali metal of atomic number at least as great as potassium, along with carbonates of other alkali metals or alkaline earth metals. The carbonates can be introduced at least partly as compounds thermally decomposable to carbonates, especially as bicarbonates, which decompose to carbonates before or during the polymer-forming reactions. If desired, the mixture of carbonates can be formed by introducing one of the alkali metals as a salt other than a carbonate, whereby the required mixture of carbonates results from double decomposition. If desired, halogen ion the same as or different from that which is to be formed as by product of polymer formation, can be added before the start of polymer formation.

In the preparative procedure that reactants can be brought together in any convenient order. If desired, reaction can be started with a substantial excess of the halogen reactant, continued until a halogen-ended oligomer is formed, then completed with newly-added hydroxy compound. The converse is equally possible.

In any preparation of the polymer, the molecular weight can be controlled by using an excess of halogen reactant or hydroxy reactant, the excess being typically in the range 0.5 to 5.0 mol percent. Such excess can be present from the start, or can be added when reaction is essentially complete. If desired, one or more monofunctional reactants can be present or added as "end-capper". Such excess reactants or monofunctional reactants can be used to decrease molecular weight if required.

Polymers according to the invention have molecular weights typically in the range 2000 to 100000. Those in the range 2000 to 10000 are of use mainly as intermediates in the preparation of higher polymers, such as block copolymers by reaction with suitable monomers, or in compositions containing also thermoset precursors. Those in the range above 9000 are of use for making articles by melt-processing, for example by incorporation with fillers or short fibres or continuous fibres. The polyethers have RV preferably at least 0.2, especially 0.3 to 2.5.

Among the polyethers according to the invention, those in which the other repeating unit is 4,4′-diphenylsulphone and/or the dimer thereof, that is $(PhSO_2Ph)_2$, to the extent of 50-60 mole % are characterised by crystallisation from the melt. In this respect they are distinct from polyether sulphones commercially available ("VICTREX PES" and "UDEL") which are not crystallisable at all, and from polyethers in which the unit alternating with 4,4′-diphenylsulphone is Ph or PhPh, which are crystallisable from solution but not from the melt. Consequently these polyethers according to the invention can be melt-processed to articles having properties more generally associated with polyetherketones, especially resistance to organic reagents such as solvents, fuels and functional fluids. They retain, moreover, glass transition temperatures Tg typically over 200 deg C, possibly over 250 deg C, which are characteristic of polyethersulphones. These polyethersulphones according to the invention are substantially cheaper than polyetherketones since they need not use fluoro monomers or the costly technology of electrophilic synthesis. Their crystallinity is illustrated especially by their ambient temperature insolubility in organic

solvents and very slow dissolution by sulphuric acid.

The compound HO-Ph-Ph-Ph-OH and its preparation are described in our co-pending European Patent Specification No 343798.

The polymers can be used neat, with possibly a stabiliser such as phosphate. They can be blended with other polymers, for example polymers within the invention but of different molecular weight, or other polyethersulphones, or polyetherketones or more than one of these. Further they can be blended with polymers differing more greatly from themselves.

The invention includes compositions in which conventional additives are present. Examples are: non-fibrous fillers such as graphite, boron nitride, mica, talc and vermiculite; and short or long fibres such as glass, carbon, graphite and polyparaphenyleneterephthalamide. The invention includes compositions in which conventional additives are present. The content of such additives is typically in the range 5-70% by weight, for example 5-30% of boron nitride, at least 20% by weight of short fibre, or 50-70% by volume of continuous fibre.

The polymer or composition can be processed for example as follows:

neat or blended: by extrusion as sheet or film or onto wire or by injection moulding;

with non-fibrous or short fibre: by injection moulding;

with continuous fibre: by lamination of polymer film with a mat or cloth; or by passing continuous fibre through molten polymer or a mixture containing polymer is dissolved or dispersed state. Sheets of the resulting impregnated fibre can be laminated together by heat and pressure to give anisotropic or quasi-isotropic structures, depending on the relative orientation of successive sheets.

with medium length fibre: by extruding into a lace, chopping to give granules, and shaping by injection moulding or extrusion.

In processing the polymer or composition, the time at temperatures near Tg is controlled preferably so as to allow development of crystallinity.

In this specification the following abbreviations are used:

DSC differential scanning calorimetry;

Tm melting point, the temperature at which the main peak of melting endotherm is observed;

Tg glass transition temperature;

RV reduced viscosity, as measured to 25° C on a solution of 1.0g of polymer in 100 $cm^3$ of solution in sulphuric acid of density 1.84g/$cm^3$. RV = $(t_s/t_o)$-1, where $t_s$ and $t_o$ are flow times of solution and solvent respectively. The determination of Tg by DSC is carried out by examining a 10 mg sample of polymer in a Perkin Elmer DSC-4 and/or DSC-7 instrument, using a heating rate of 20° C/min under nitrogen. From the resulting curve the onset of the Tg transition is obtained. This is measured as the intersection of lines drawing among the pre-transition baseline and a line drawn along the greatest slope obtained during the transition.

In the following Examples the monomers used in making a series of polymers are identified thus:

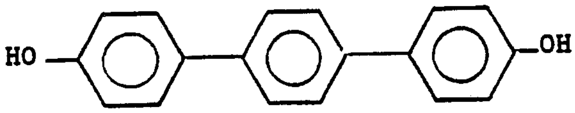 "DHT" (II)

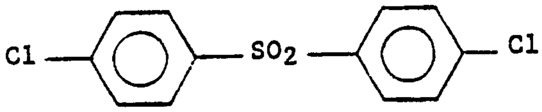 (III)

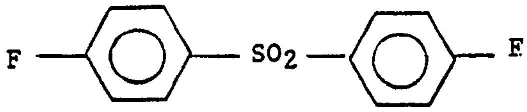 (IV)

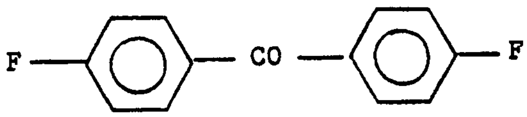 (V)

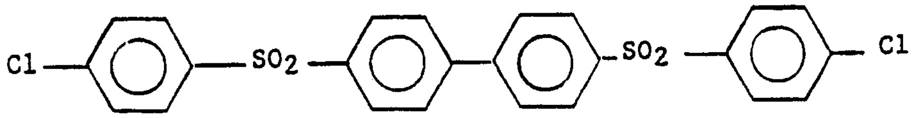 (VI)

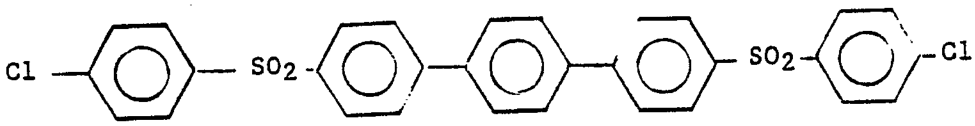 (VII)

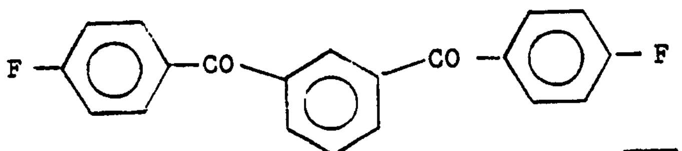 (VIII)

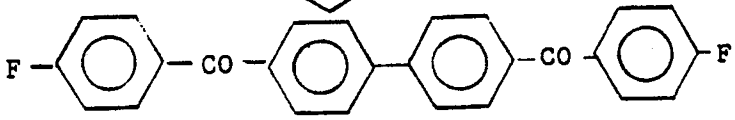 (IX)

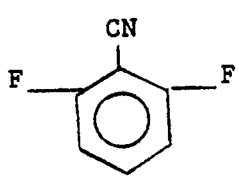 (X)

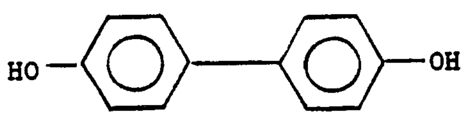 (XI)

Example 1

To a 3 necked glass reaction flask of 250 ml capacity, equipped with a stainless steel thermocouple, nitrogen inlet, stainless steel anchor stirrer, still head and receiver was charged monomer II (0.020 m, 5.25 g) and, as second monomer, III (0.2020 m, 5.80 g), and diphenyl sulphone (40.0 g).

The flask was placed in a heated metal bath and when the contents had reached a temperature of 180 °C, potassium carbonate (0.0204 m, 2.82 g) was added. The mixture was held at 175 °C for 1.0 h, 200 °C for 0.5 h, 250 °C for 1.0 h, 275 °C for 1 h and finally 300 °C for 2h.

The reaction mixture was allowed to cool and solidify and was broken up and milled to pass a 2mm screen. Diphenyl sulphone and inorganics were removed by washing successively with acetone/methanol 1:1 mixture, acetone, water and finally acetone. The polymer was dried at 120 °C under vacuum. It was found to be insoluble in solvents such as DMF and NMP but after prolonged (10-20 days) exposure was found to dissolve in concentrated sulphuric acid, in which solvent the RV was 0.27.

Example 2-8

Using similar equipment and method to that described in Example 1, polymers were prepared using other monomers in place of III. The polymer made from monomers II and IV was difficult to dissolve, but in $H_2SO_4$ after prolonged dissolution its RV was 1.40.

Characteristic data including percentage crystallinity for the polymers of these Examples are set out in the Table.

TABLE

| Example | Second Monomer | Tg °C | Tm °C | % cryst | Remarks |
|---|---|---|---|---|---|
| 1 | III | 241 | 385 | 44 | Rv in $H_2SO_4$ 0.27 |
| 2 | IV | 251 | 389 (main) | 41 | Rv in $H_2SO_4$ 1.40 |
| 3 | V | NA | NA | - | highly crystalline |
| 4 | VI | 263 | 408 | 50 | |
| 5 | VII | - | multiple | 39 | |
| 6 | VIII | 174 | 394 | 72 | |
| 7 | IX | - | over 570 | - | intractable |
| 8 | X | 214 | 427 | - | |

Example 9

Using similar equipment and method to that described in Example 1 a polymer was prepared using II (0.050 m, 13.12 ), XI (0.050 m, 9.31 g) and V (0.101 m, 22.04 g). The product had a Tg of 178 °C and a Tm of 410 °C. The RV was 1.71.

**Claims**

1. An aromatic polymer comprising the repeating unit
-Ph-Ph-Ph-
wherein Ph represents paraphenylene, linked in the polymer chain to itself and/or to adjacent other repeating units by way of oxygen in a group containing up to 3 atoms in line,
with the proviso that the polymer does not comprise the unit
$-Ph-S-Ph-O-Ph-Ph-Ph-O-Ph-SO_2-Ph-O-$

2. An aromatic polymer comprising the repeating unit
-Ph-Ph-Ph-
wherein Ph represents paraphenylene, linked in the polymer chain to itself and/or to adjacent other repeating units by way of oxygen in a group containing up to 3 atoms in line, the other repeating unit, if present, containing a major proportion of an electron withdrawing group.

3. An aromatic polymer as claimed in claim 1 or claim 2 wherein the other aromatic repeating unit includes the unit $Ar-(Y-Ar)_n$, where Y is an electron-withdrawing group and Ar is a divalent aromatic hydrocarbon group, selected from the group consisting of $Ph-SO_2-Ph$, Ph-CO-Ph, $Ph-SO_2-Ph-Ph-SO_2-Ph$,

Ph-CO-Ph'-CO-Ph, where Ph' is paraphenylene or metaphenylene, Ph-CO-Ph-Ph-CO-Ph, $Ph-SO_2-Ph-Ph-Ph-SO_2-Ph$ and 2-cyano-1,3-phenylene.

4. An aromatic polymer as claimed in claim 1 which comprises, in addition to the unit -Ph-Ph-Ph-, 4,4'-diphenylsulphone and/or the dimer thereof, is to the extent of 50-60% and is crystallisable from the melt.

5. A process for preparing an aromatic polymer as defined in claims 1 or claim 2 comprises reacting a dihydroxy aromatic component, comprising 4,4''-dihydroxy-p-terphenyl, with at least one difunctional halogen compound and the conditions for carrying the process include at least one of the following

(i) the presence of a sulphoxide or a sulphone as solvent;

(ii) the presence of a base in a quantity at least stoichiometrically equivalent to the dihydroxy aromatic component; and

(iii) a temperature in the range 150-400 °C.

6. A polymer composition comprising an aromatic polymer as claimed in claim 1 or claim 2 reinforced with fibres selected from the group consisting of glass, carbon, graphite and polyparaphenylene terephthalamide.

7. A shaped article comprising the polymer as claimed in claim 1 or claim 2 or a composition as claimed in claim 6.